# EUROPÄISCHE PATENTSCHRIFT

(11) **EP 0 896 206 B1**
(45) Veröffentlichungstag und Bekanntmachung des Hinweises auf die Patenterteilung: **11.12.2002**
(21) Anmeldenummer: 98112848.1
(22) Anmeldetag: 10.07.1998
(51) Int. Cl.: G01D 5/36, G01D 5/245

(54) **Abtasteinheit für eine optische Positionsmesseinrichtung**
Read-out unit for an optical position measuring device
Unité de lecture pour dispositif optique de mesure de position

(30) Priorität: 07.08.1997 DE 19734136
(43) Veröffentlichungstag der Anmeldung: 10.02.1999
(73) Patentinhaber: Dr. Johannes Heidenhain GmbH, 83292 Traunreut (DE)
(72) Erfinder: Höfer, Volker, 83371 Stein/Traun (DE); Holzapfel, Wolfgang, Dr., 83119 Obing (DE); Huber, Walter, 83278 Traunstein (DE); Mayer, Elmar, Dr., 83342 Tacherting/Reit (DE)

(56) Entgegenhaltungen:
- EP-A- 0 714 015
- DE-A- 3 536 466
- DE-A- 19 530 560

## Beschreibung

Die vorliegende Erfindung betrifft eine Abtasteinheit für eine optische Positionsmeßeinrichtung nach dem Oberbegriff des Anspruches 1.

Bekannte optische Positionsmeßeinrichtungen liefern neben Inkrementalsignalen bezüglich des Relativversatzes zweier zueinander beweglicher Teile in der Regel auch sogenannte Referenzimpulssignale. Über diese Signale kann bei einer definierten Relativposition der zueinander beweglichen Teile ein exakter Absolutbezug der Positionsmessung hergestellt werden. Zur Erzeugung der Referenzimpulssignale sind auf Seiten des Maßstabes der Positionsmeßeinrichtung an ein oder mehreren Stellen Felder mit Referenzmarkierungen angeordnet. Die Abtasteinheit der optischen Positionsmeßeinrichtung umfaßt u.a. mindestens ein Referenzmarkierungs-Abtastfeld, über das bei der zu detektierenden Relativposition von Maßstab und Abtasteinheit ein entsprechendes Referenzimpulssignal erzeugbar ist.

Bezüglich der Anordnung der Referenzmarkierungen auf dem Maßstab bzw. der zugehörigen Abtastfelder auf Seiten der Abtasteinheit existieren nunmehr eine Reihe von verschiedenen Möglichkeiten.

So ist beispielsweise aus der US 4,263,506 bekannt, die Referenzmarkierungen auf dem Maßstab seitlich benachbart zur Teilungsspur mit der Inkrementalteilung anzuordnen. Problematisch hierbei ist jedoch, daß im Fall einer eventuellen Verdrehung von Maßstab und Abtasteinheit um eine Achse senkrecht zur Maßstab- oder Abtastebene die exakte Zuordnung des Referenzimpulssignales zu einer bestimmten Periode der Inkrementalsignale evtl. nicht mehr gewährleistet ist.

Daneben ist es auch möglich, die Referenzmarkierungen unmittelbar in die Teilungsspur mit der Inkrementalteilung zu integrieren, wie dies etwa in der US 3,985,448 vorgeschlagen wird. Zu diesem Zweck können an der gewünschten Stelle des Maßstabes in der Inkrementalteilung z.B. ein oder mehrere Stege oder Striche der Inkrementalteilung weggelassen werden. Weitere Varianten bezüglich der Integration von Referenzmarkierungen in die Spur mit der Inkrementalteilung sind femer aus der DE 35 36 466 A1 oder aus der US 4,866,269 bekannt. In diesen Druckschriften wird vorgeschlagen, in der Inkrementalteilung die Referenzmarkierungen als aperiodische Strich- oder Stegfolgen auszubilden oder aber Bereiche mit veränderten optischen Eigenschaften als Referenzmarkierungen zu nutzen, die sich von der restlichen Inkrementalteilung unterscheiden.

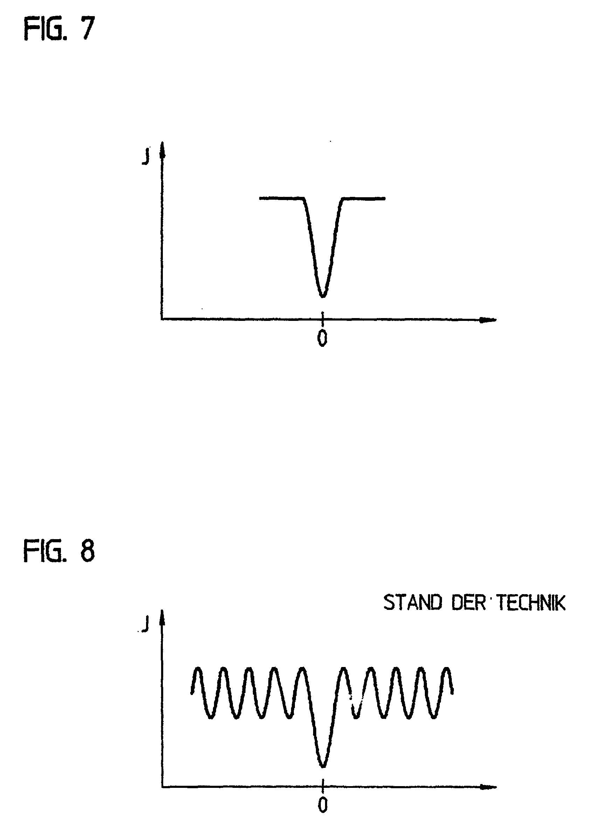

Als problematisch bei der Integration von Referenzmarkierungen in die Inkrementalteilung erweist sich jedoch grundsätzlich, daß benachbart zur eigentlichen Referenzposition dem detektierten Referenzimpulssignal üblicherweise ein durch die Inkrementalteilung des Maßstabes bedingtes periodisches Signal überlagert ist. Eine beispielhafte Darstellung des Signalverlaufes in diesem Bereich ist in Figur 8 gezeigt. Die Modulation des Referenzimpulssignales ist demzufolge stark reduziert, d.h. eine sichere Detektion des Referenzimpulssignales an der Referenzposition ist entsprechend schwierig.
Als weitere Anforderung bei der Integration einer Referenzmarkierung in die Inkrementalteilung ist selbstverständlich aufzuführen, daß eine möglichst geringe Störung der Inkrementalsignale durch das Referenzimpulssignal resultieren sollte.

Aufgabe der vorliegenden Erfindung ist es daher, insbesondere eine Abtasteinheit für eine optische Positionsmeßeinrichtung zu schaffen, bei der die oben angesprochenen Probleme in Verbindung mit der Detektion eines Referenzimpulssignales minimiert werden.

Diese Aufgabe wird gelöst durch eine Abtasteinheit für eine optische Positionsmeßeinrichtung mit den Merkmalen im kennzeichnenden Teil des Anspruches 1.

Vorteilhafte Varianten zur Ausgestaltung der erfindungsgemäßen Abtasteinheit ergeben sich aus den Maßnahmen in den abhängigen Ansprüchen.

Eine optische Positionsmeßeinrichtung mit einer erfindungsgemäß ausgebildeten Abtasteinheit ist Gegenstand des Anspruches 11.

Aufgrund der erfindungsgemäß vorgesehenen optischen Filterwirkung ist nunmehr sichergestellt, daß das Referenzimpulssignal an der jeweiligen Referenzposition sicher detektierbar ist. Benachbart zur Referenzposition liegt nun nicht mehr der periodisch modulierte Inkrementalsignalanteil am Referenzimpulssignal vor, sondern ein Signalanteil mit weitgehend konstanter bzw. gleichbleibender Amplitude. Mindestens die Grundwelle des Inkrementalsignalanteiles am Referenzimpulssignal wird dabei gefiltert. Eine sicherere bzw. einfachere Detektion des Referenzimpulssignales an der Referenzposition ist möglich.

Hinsichtlich der erforderlichen optischen Filterwirkung ergeben sich eine Reihe von Möglichkeiten. So können entweder auf Seiten des Referenzmarkierungs-Abtastfeldes geeignet ausgebildete Blenden- bzw. Amplitudenstrukturen zur Filterung herangezogen werden. Daneben ist es jedoch auch möglich, diese Filterwirkung mit Hilfe von Phasenstrukturen in den durchlässigen Bereichen des Referenzmarkierungs-Abtastfeldes zu erzielen. Desweiteren existieren selbstverständlich auch Kombinationsmöglichkeiten zwischen diesen verschiedenen Filterungsansätzen.
Wenn im Rahmen einer vorteilhaften Ausgestaltung der erfindungsgemäßen Abtasteinheit die erwähnten Phasenstrukturen zur Filterung eingesetzt werden und diese Bereiche zudem eine fokussierende optische Wirkung aufweisen, resultieren weitere Vorteile der erfindungsgemäßen Abtasteinheit. Insbesondere ergibt sich dann eine geringere Empfindlichkeit bei Verkippungen der Abtasteinheit um die Strichrichtung der abgetasteten Teilungsstrukturen. So wird etwa bei einer geringfügigen Verkippung des Maßstabes um die Strich- oder Stegrichtung aufgrund der gewählten Ausgestaltung ein sehr viel kleinerer Anteil der beim zweiten Durchgang durch die Abtastplatte tretenden Lichtbündel abgeschnitten als bei einer herkömmlichen Ausgestaltung der Abtasteinheit. Die Zuordnung des Referenzimpulsignales zur entsprechenden Inkrementalsignal-Periode -Periode bleibt aufgrund der Nähe des neutralen Drehpunktes zum Maßstab auch bei größeren Verkippungen gewährleistet als dies bei einer herkömmlichen Abtastungsanordnung der Fall ist.
Desweiteren läßt sich mit dieser Ausgestaltung der Abtasteinheit bzw. des Referenzmarkierungs-Abtastfeldes eine höhere Signalintensität auf der Detektorseite erreichen, wenn fokussierende optische Elemente eingesetzt werden.

Im Zusammenhang mit der Ausgestaltung der optischen Filterstruktur bzw. mit der Wahl geeigneter fokussierender optischer Elemente im Referenzmarkierungs-Abtastfeld ergeben sich eine Reihe von Ausgestaltungsmöglichkeiten, die je nach Anwendungsfall gewählt werden können.

Alternativ zu Filterung über geeignet ausgebildete Referenzmarkierungs-Abtastfelder kann die erfindungsgemäße Filterung auch durch die geeignete Ausbildung bzw. Strukturierung eines oder mehrerer Detektorelemente erfolgen.

Weitere Vorteile sowie Einzelheiten der erfindungsgemäß ausgebildeten Abtasteinheit ergeben sich aus der nachfolgenden Beschreibung mehrerer Ausführungsbeispiele anhand der beiliegenden Figuren.

Dabei zeigt
- Figur 1a: eine schematisierte Schnittdarstellung einer optischen Positionsmeßeinrichtung mit einer ersten Variante der erfindungsgemäßen Abtasteinheit;
- Figur 1b: eine Draufsicht auf den abgetasteten Maßstab aus Figur 1a;
- Figur 1c: eine Draufsicht auf die Abtastplatte der Abtasteinheit aus Figur 1a;
- Figur 1d: eine Draufsicht auf die in der Abtasteinheit aus Figur 1a angeordnete Trägerplatine mit einer Lichtquelle und mehreren Detektorelementen;
- Figur 2a: eine Teil-Draufsicht auf eine Abtastplatte mit dem zweiten Ausführungsbeispiel eines erfindungsgemäß ausgestalteten Referenzimpuls-Abtastfeldes;
- Figur 2b: eine vergrößerte Ansicht eines Teilbereiches des Referenzimpuls-Abtastfeldes aus Figur 2a;
- Figur 3a: eine Teil-Draufsicht auf eine Abtastplatte mit dem dritten Ausführungsbeispiel eines erfindungsgemäß ausgestalteten Referenzimpuls-Abtastfeldes;
- Figur 3b: eine seitliche Schnittansicht des Ausführungs-beispieles aus Figur 3a;
- Figur 4: eine Teil-Draufsicht auf eine Abtastplatte mit dem vierten Ausführungsbeispiel eines erfindungsgemäß ausgestalteten Referenzimpuls-Abtastfeldes;
- Figur 5: eine Teil-Draufsicht auf eine Abtastplatte mit dem fünften Ausführungsbeispiel eines erfindungsgemäß ausgestalteten Referenzimpuls-Abtastfeldes;
- Figur 6: eine Draufsicht auf die Anordnung mehrerer Referenzmarkierungs-Detektorelemente, die ebenfalls die erfindungsgemäße Filterwirkung sicherstellen;
- Figur 7: eine Darstellung eines erfindungsgemäß erzeugten Referenzimpulssignales;
- Figur 8: eine Darstellung eines Referenzimpulssignales, das gemäß dem Stand der Technik erzeugt wurde.

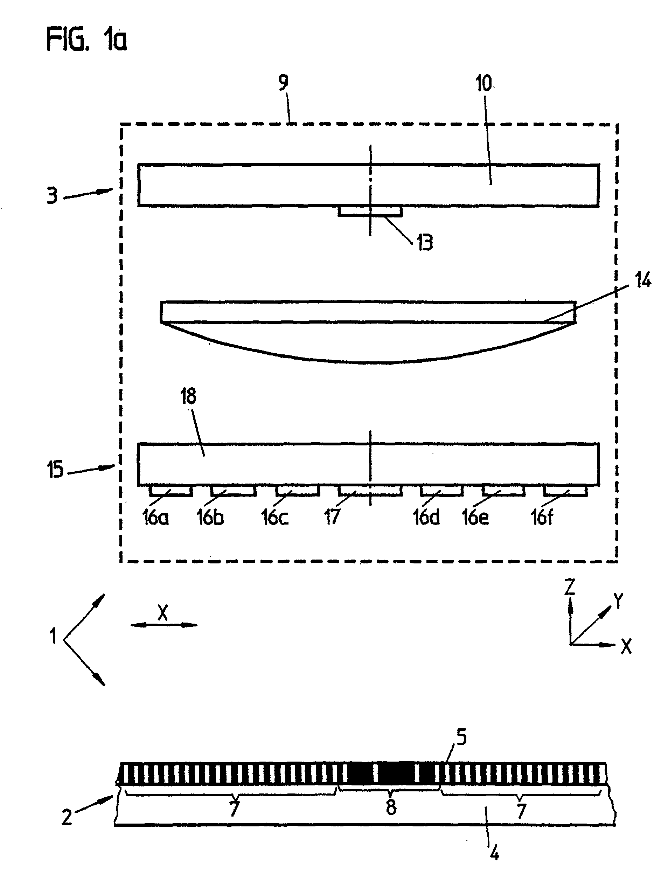

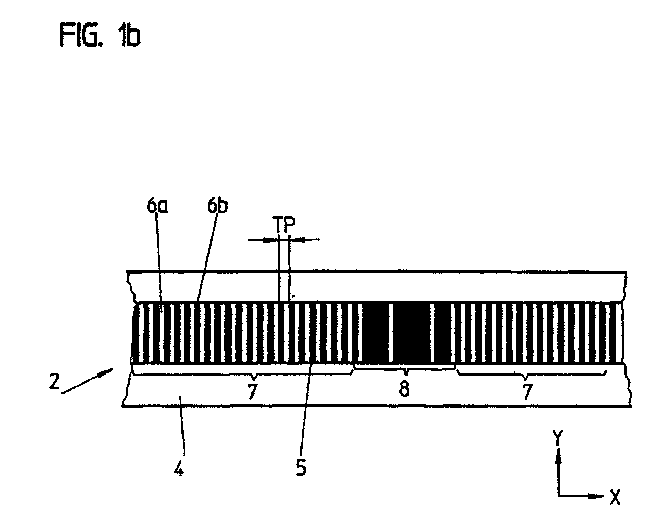

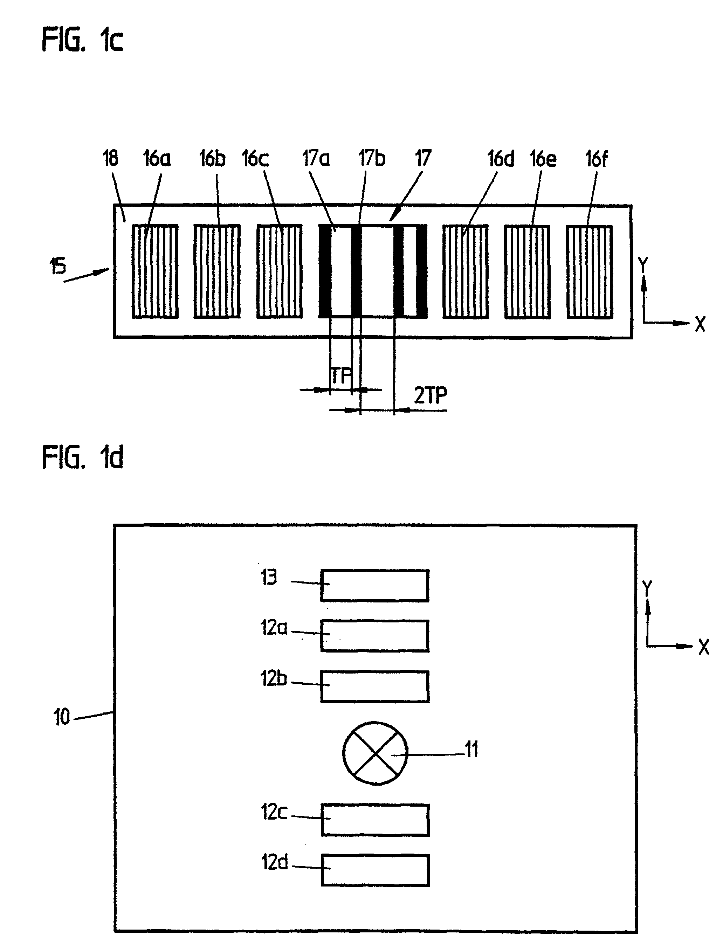

In Figur 1a ist in einer schematisierten seitlichen Ansicht eine optische Positionsmeßeinrichtung in Verbindung mit einer ersten Variante einer erfindungsgemäß ausgebildeten Abtasteinheit gezeigt. Die dargestellte optische Positionsmeßeinrichtung 1 ist als Auflicht-Meßsystem zur Erfassung der Relativposition zweier zueinander verschiebbarer Objekte ausgebildet, welche in Figur 1 aus Übersichtlichkeitsgründen nicht eingezeichnet sind. Eines der beiden Objekte ist hierbei mit dem Maßstab 2 der Positionsmeßeinrichtung 1 verbunden, das andere Objekt mit der Abtasteinheit 3. Bei den zueinander in Meßrichtung x verschiebbaren Objekten kann es sich beispielsweise um das Werkstück sowie das Werkzeug einer numerisch gesteuerten Werkzeugmaschine handeln.

Selbstverständlich kann die erfindungsgemäße Abtasteinheit alternativ zur gezeigten Verwendung in einem Auflicht-Meßsystem auch in Verbindung mit einer im Durchlicht arbeitenden optischen Positionmeßeinrichtung eingesetzt werden. Ebenso ist es natürlich möglich, eine optische Positionsmeßeinrichtung mit einer erfindungsgemäß ausgestalteten Abtasteinheit zu versehen, die zur Erfassung rotatorischer Relativbewegungen zweier Objekte bestimmt ist. Das gezeigte Ausführungsbeispiel einer optischen Positionsmeßeinrichtung ist demzufolge keineswegs einschränkend in Verbindung mit der vorliegenden Erfindung zu sehen, d.h. die erfindungsgemäßen Maßnahmen im Zusammenhang mit der Erzeugung bzw. Erfassung von Referenzimpulssignalen können selbstverständlich in Verbindung mit verschiedensten optischen Positionsmeßeinrichtungen eingesetzt werden.

Die in Figur 1a gezeigte Variante einer optischen Positionsmeßeinrichtung 1 umfaßt zum einen den vorzugsweise stationär angeordneten, linearen Maßstab 2, bestehend aus einem Teilungsträger 4, auf dem mindestens eine Teilungsspur 5 in Meßrichtung x angeordnet ist. Die Teilungsspur 5 wird von der dazu beweglichen Abtasteinheit 3 optisch abgetastet, um die Relativposition der beiden Objekte zueinander zu bestimmen. Wie insbesondere aus der Ansicht in Figur 1b erkennbar ist, besteht im dargestellten Ausführungsbeispiel die auf dem Teilungsträger 4 angeordnete Teilungsspur 5 aus einer Abfolge von reflektierenden und nicht-reflektierenden Bereichen 6a, 6b, die sich senkrecht zur Meßrichtung x in y-Richtung erstrecken. Die Teilungsspur 5 umfaßt eine Inkrementalteilung 7, die bei der vorgesehenen optischen Abtastung periodisch modulierte Inkrementalsignale liefert sowie ein oder mehrere Felder mit Referenzmarkierungen 8, die vorbestimmte Absolutpositionen entlang des Maßstabes 2 bzw. der Teilungsspur 5 mit der Inkrementalteilung 7 kennzeichnen.
Im Gegensatz zur bekannten, seitlich benachbarten Anordnung der Referenzmarkierungen 8 in Bezug auf die Inkrementalteilung 7 werden die Felder mit den Referenzmarkierungen 8 demzufolge in die gleiche Teilungsspur 5 integriert wie die Inkrementalteilung 7. Je nach Anwendungsfall kann selbstverständlich eine unterschiedliche Anzahl derartiger Referenzmarkierungen 8 entlang der benötigten Meßlänge vorgesehen werden; hierzu zählt beispielsweise auch die bekannte abstandscodierte Anordnung mehrerer Referenzmarkierungen.
Die Vorteile einer derartigen Anordnung der Referenzmarkierungen 8 wurden bereits oben diskutiert. An dieser Stelle sei lediglich ergänzend die deutlich geringere Empfindlichkeit dieser Anordnungs-Variante bei der Synchronisation der Referenzimpulssignale und der Inkrementalsignale im Fall einer Verdrehung von Maßstab 2 und Abtasteinheit 3 um eine Achse z senkrecht zur Maßstabsebene x-y erwähnt.

Die dargestellte optische Positionsmeßeinrichtung 1 umfaßt desweiteren die relativ zum Maßstab 2 in Meßrichtung x bewegliche Abtasteinheit 3, bestehend aus mehreren Komponenten, die vorzugsweise in einem - schematisch angedeuteten - Gehäuse 9 angeordnet sind. Zu den verschiedenen Komponenten der Abtasteinheit 3 im gezeigten Ausführungsbeispiel zählt dabei u.a. eine Trägerplatine 10 mit einer Lichtquelle sowie mehreren optoelektronischen Detektorelementen 13, eine Optik 14 sowie eine Abtastplatte 15 mit mehreren Abtastfeldern 16a-16f und 17. Die Abtastfelder 16a-16f sind auf einem lichtdurchlässigen Trägerelement 18 angeordnet. Das von der Lichtquelle, vorzugsweise ausgebildet als LED, emittierte Licht gelangt nach der Kollimation über die Optik 14 durch die Abtastplatte 15 auf den Maßstab 2 bzw. die Teilungsspur 5 und wird von dort durch die Abtastplatte 15 bzw. die Abtastfelder 16a-16f, 17 über die Optik 14 auf die verschiedenen Detektorelemente 13 zurück abgebildet. In der Darstellung der Figur 1a ist lediglich das Referenzimpuls-Detektorelement 13 erkennbar; ebenso ist die Lichtquelle auf der Trägerplatine 10 nicht erkennbar. In der nachfolgenden zu beschreibenden Figur 1d sind daneben auch die Inkrementalsignal-Detektor-Elemente 12a-12d sowie die Lichtquelle 11 dargestellt.

Im Fall der Relativbewegung von Abtasteinheit 3 und Maßstab 2 resultieren bei der Abtastung der Inkrementalteilung 7 periodisch modulierte Inkrementalsignale, die in üblichen Auswerteeinheiten zur Positionsbestimmung weiterverarbeitbar sind. Da es sich bei der Art und Weise der Erzeugung der Inkrementalsignale lediglich um eine mögliche Variante handelt, sei an dieser Stelle auf die vorveröffentlichte EP 0 735 346 A2 der Anmelderin verwiesen, wo das in dieser Ausführungsform eingesetzte Abtastprinzip näher erläutert wird. Bei der, in diesem Ausführungsbeispiel gewählten Erzeugung der Inkrementalsignale handelt es sich um eine sogenannte (Quasi)-Einfeldabtastung, die insbesondere hinsichtlich Verschmutzungsunempfindlichkeit Vorteile bietet. Selbstverständlich kann jedoch auch eine bekannte Vierfeld-Abtastung zur Erzeugung der Inkrementalsignale in Verbindung mit den erfindungsgemäßen Maßnahmen eingesetzt werden etc.. Desweiteren ist es keineswegs zwingend, die im Beispiel vorgesehene Optik 14 einzusetzen, d.h. grundsätzlich lassen sich die nachfolgenden erfindungsgemäßen Überlegungen auch auf eine optische Positionsmeßeinrichtung ohne Kollimationsoptik übertragen etc..

Im dargestellten Ausführungsbeispiel sind in der Abtasteinheit 3 zur Erzeugung der Inkrementalsignale auf der Abtastplatte 15 mehrere Inkrementalteilungs-Abtastfelder 16a-16f auf einem Trägerelement 18 vorgesehen, die beispielsweise gemäß Figur 8 der erwähnten EP 0 735 346 A2 ausgebildet sind. Bei der optischen Abtastung der Inkrementalteilung 7 ergeben sich damit vier um jeweils 90° phasenversetzte Inkrementalsignale.

Für die Abtastung der mindestens einen in die Inkrementalteilung 7 integrierten Referenzmarkierung 8 ist ein weiteres Abtastfeld 17 auf der Abtastplatte 15 angeordnet, welches in der nachfolgend beschriebenen Art und Weise erfindungsgemäß ausgestaltet ist. Dem Referenzmarkierungs-Abtastfeld 17 ist auf Seiten der Trägerplatine 10 mindestens ein Referenzimpuls-Detektorelement 13 zugeordnet, über das die Erfassung des Referenzimpulssignales bei mindestens einer vorbestimmten Relativposition von Maßstab 2 und Abtasteinheit 3 erfolgt.

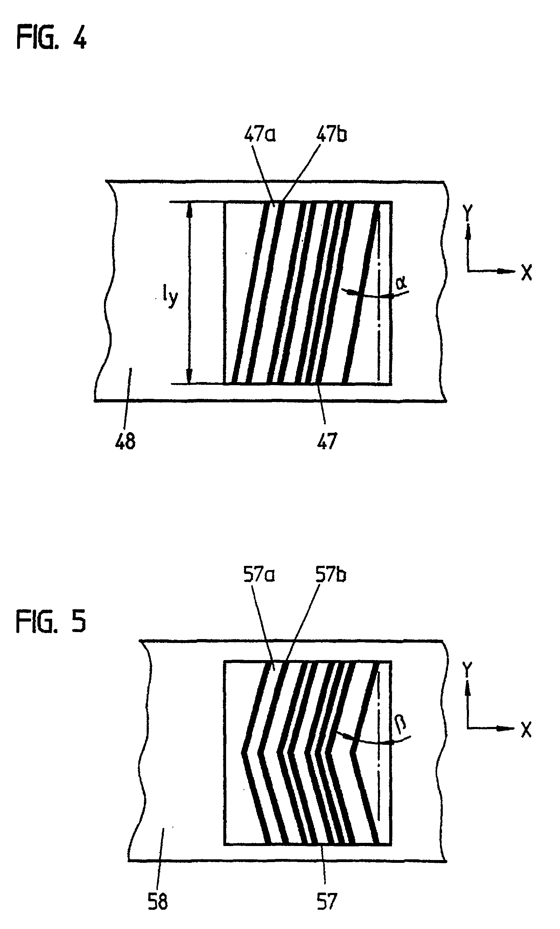

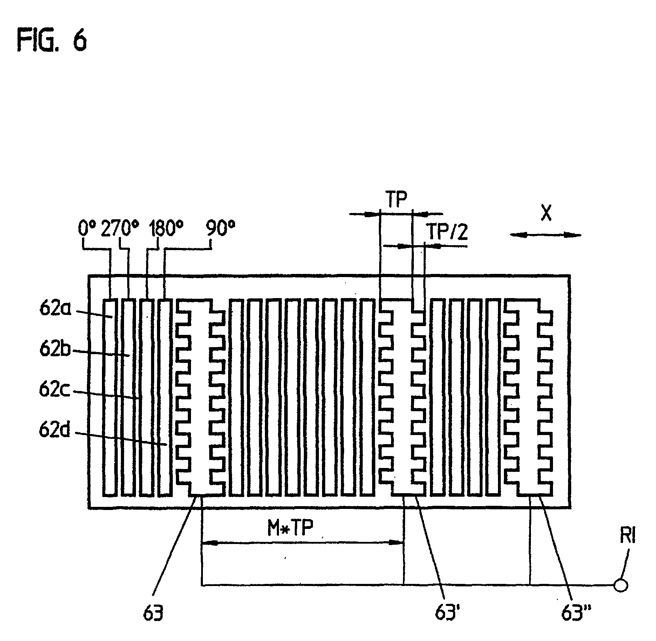

Neben der dargestellten Variante mit lediglich einem Referenzimpuls-Detektorelement 13 zur Erfassung des Referenzimpulssignales ist es bei der gezeigten Abtast-Anordnung grundsätzlich desweiteren auch möglich, ein zweites Detektorelement auf der Trägerplatine anzuordnen, um ein sogenanntes Gleichlichtsignal zu erzeugen. Über die geeignete Differenz-Verschaltung der beiden Referenzmarkierungs-Detektorelemente läßt sich derart die Detektionssicherheit bei der Erfassung des Referenzimpulssignales erhöhen. Zur Erzeugung des Gleichlichtsignales stehen wiederum verschiedene bekannte Möglichkeiten zur Verfügung. Beispielsweise sei an dieser Stelle lediglich auf eine vorteilhafte Variante verwiesen, wie sie etwa in der vorveröffentlichten EP 0754 933 A2 der Anmelderin beschrieben ist. Dort wird in den Beispielen der Figuren 4 und 5 vorgeschlagen, die transparenten Bereiche der Abtaststruktur teilweise mit einer ablenkenden optischen Wirkung zu versehen, so daß mit Hilfe eines einzigen Referenzmarkierungs-Abtastfeldes sowohl das eigentliche Referenzimpulssignal wie auch das zugehörige Gleichlichtsignal erzeugbar sind.

Eine Draufsicht auf einen Teil des Maßstabes 2 mit der abgetasteten Inkrementalteilung 7 sowie mit einer in die Inkrementalteilung 7 integrierten Referenzmarkierung 8 ist in Figur 1b gezeigt. Hierbei stellen die hellen Teile die reflektierenden Bereiche 6a der Teilungsspur 5 dar, die dazwischen liegenden dunklen Bereiche 6b sind nicht-reflektierend ausgebildet. Bei den nicht-reflektierend ausgebildeten Bereichen 6b kann es sich z.B. um geätzte Bereiche auf dem grundsätzlich reflektierenden Teilungsträger 4 aus Stahl handeln. Die Inkrementalteilung 7 besteht im dargestellten Ausführungsbeispiel aus einer periodischen Abfolge von reflektierenden und nicht-reflektierenden Bereichen 6a, 6b mit einer Teilungsperiode TP = 40µm, wobei die Bereiche 6a, 6b mit 20µm jeweils gleich breit sind.

Alternativ zur gezeigten Variante eines Maßstabes für die Auflicht-Abtastung können die erfindungsgemäßen Maßnahmen selbstverständlich auch in Verbindung mit einem Durchlicht-Meßsystem eingesetzt werden. Auf der Maßstab-Seite wären anstelle der reflektierenden Bereiche dann transmittierende Bereiche vorzusehen sowie anstelle der nicht-reflektierenden Bereiche entsprechende opake Bereiche.

Im Bereich des Feldes mit der Referenzmarkierung 8 innerhalb der Teilungsspur 5 liegt nunmehr keine periodische Abfolge von reflektierenden und nicht-reflektierenden Bereichen 6a, 6b mit der Teilungsperiode TP der Inkrementalteilung 7 vor, vielmehr wurden dort eine Reihe von reflektierenden Bereichen 6a ausgelassen, so daß einzelne nicht-reflektierende Bereiche 6b mit Breiten resultieren, die größer sind als im Fall der periodischen Anordnung der Inkrementalteilung 7. Die reflektierenden Bereiche 6a sind demzufolge im Feld der Referenzmarkierung 8 in Meßrichtung x entweder im Abstand einer oder mehrerer ganzzahliger Teilungsperioden der Inkrementalteilung 7 zueinander beabstandet angeordnet. Eine derartige Anordnung ist insofern erforderlich, als damit definierte Phasenbeziehungen der resultierenden Inkrementalsignale auch im Bereich der Referenzmarkierung gewährleistet sind. Die Gesamtlänge der dargestellten Referenzmarkierung 8 auf dem Maßstab 2 beträgt in Meßrichtung x bei diesem Ausführungsbeispiel etwa 1,6mm.

Wie bereits angedeutet können entlang des Maßstabes 2 selbstverständlich mehrere derartige Referenzmarkierungen 8 vorgesehen werden. Im Fall eines Durchlicht-Meßsystems wären desweiteren anstelle der reflektierenden und nicht-reflektierenden Bereiche durchlässige und nicht-durchlässige Bereiche in der Teilungsspur des Maßstabes anzuordnen. Daneben ist es auch möglich, mehrere Teilungsspuren 5 mit Inkrementalteilungen 7 und integrierten Referenzmarkierungen 8 auf Seiten des Maßstabes 2 in einer parallelen Anordnung vorzusehen etc..

Eine Draufsicht auf eine erfindungsgemäß ausgestaltete Abtastplatte 15 der Abtasteinheit 3 ist in Figur 1c dargestellt. Auf einem transparenten Trägerelement 18, beispielsweise aus Glas, sind hierbei verschiedene Abtastfelder 16a-16f, 17 in Meßrichtung x benachbart zueinander angeordnet, die zur Abtastung der Inkrementalteilung 7 sowie zur Abtastung der Referenzmarkierung 8 auf dem Maßstab 2 dienen. Im dargestellten Ausführungsbeispiel der Abtastplatte 15 ist eine Ausbildung bzw. Anordnung der insgesamt sechs Inkrementalteilungs-Abtastfelder 16a-16f gemäß der bereits erwähnten Fig. 8 aus der EP 0 735 346 A2 vorgesehen, die eine (Quasi)-Einfeldabtastung und die und die Erzeugung von vier um 90° phasenversetzten Inkrementalsignalen ermöglichen. Die gewählte Teilungsperiode in den Inkrementalteilungs-Abtastfeldern 16a-16d beträgt im gezeigten Beispiel 40µm.

Zwischen den Inkrementalteilungs-Abtastfeldern 16a-16f ist auf der Abtastplatte 15 ein weiteres Abtasteld 17 angeordnet, welches zur Abtastung der Referenzmarkierung 8 auf dem Maßstab 2 vorgesehen ist. In der Darstellung von Figur 1c ist hierbei die einfachste erfindungsgemäße Variante eines Referenzmarkierungs-Abtastfeldes 17 gezeigt. Die Anordnung bzw. Abfolge der durchlässigen und undurchlässigen Bereiche 17a, 17b innerhalb der Referenzmarkierungs-Abtastfeldes 17 wurde geeignet zur Abtastung der Referenzmarkierung 8 gewählt. Die durch das Referenzmarkierungs-Abtastfeld 17 resultierende optische Filterwirkung wird durch die Wahl der Breite der durchlässigen Bereiche 17a dieses -Abtastfeldes 17 in Meßrichtung x bewirkt. Deren Breite in x-Richtung wird hierbei identisch zur Teilungsperiode TP der abgetasteten Inkrementalteilung 7 oder einem ganzzahligen Vielfachen hiervon gewählt. Bereits auf diese Art und Weise läßt sich grundsätzlich eine optische Filterwirkung bei der Detektion des Referenzimpulssignales erzielen, so daß benachbart zur Referenzposition der periodische Inkrementalsignalanteil am Referenzimpulssignal verringert wird. Dies ist darauf zurückzuführen, daß bei einer derartigen Dimensionierung des Referenzmarkierungs-Abtastfeldes 17 detektorseitig stets eine Mittelung über eine Signalperiode der Inkrementalsignale resultiert und demzufolge kein moduliertes Inkrementalsignal benachbart zur Referenzposition vorliegt, sondern ein Signal mit einem weitgehend gleichbleibenden Intensitätsverlauf. Der entsprechende Signalverlauf im Bereich der Referenzposition "0", der mit Hilfe eines derart ausgebildeten Referenzmarkierungs-Abtastfeldes 17 resultiert, ist in Figur 7 gezeigt.

Über die erfindungsmäße Ausgestaltung des Referenzmarkierungs-Abtastfeldes 17 mit einer optischen Filterwirkung läßt sich der periodische Inkrementalsignalanteil am Referenzimpulssignal demzufolge deutlich verringern bzw. eliminieren. Verschiedenartige weitere erfindungsgemäße Varianten bezüglich der vorteilhaften Ausgestaltung des Referenzmarkierungs-Abtastfeldes 17 sowie alternative Ansätze zur Filterung dieses Signalanteiles werden anhand der folgenden Ausführungsbeispiele noch detailliert erläutert.

In Figur 1d ist schließlich eine Draufsicht auf die Trägerplatine 10 der Abtasteinheit 3 gezeigt, die u.a. neben der Lichtquelle 11 die verschiedenen optoelektronischen Detektorelemente 12a-12d, 13, vorzugsweise Photoelemente, zur Erfassung der unterschiedlichen Abtastsignale enthält. Neben den vier Detektorelementen 12a-12d zur Erfassung der Inkrementalsignale aus den Inkrementalteilungs-Abtastfeldern 16a-16f ist ein weiteres Referenzimpuls-Detektorelement 13 zur Erfassung der Referenzimpulsignale aus dem Referenzmarkierungs-Abtastfeld 17 vorgesehen. Wie aus den Köordinatenangaben der Figuren 1a-1d hervorgeht sind die verschiedenen Detektorelemente 12a-12d, 13 auf der Trägerplatine 10 in y-Richtung angeordnet, d.h. senkrecht zur Meßrichtung x.

Um eine derartige Anordnung der Detektorelemente in Bezug auf die Meßrichtung x zu ermöglichen, muß selbstverständlich eine Ablenkung der in Richtung der Detektorelemente reflektierten Strahlenbündel transversal zur Meßrichtung x, d.h. in y-Richtung erfolgen. Die Ablenkung der Strahlenbündel, die zur Erzeugung der Inkrementalsignale herangezogen werden, als auch die phasenbestimmende Wirkung auf die Strahlenbündel resultiert dabei aus der zusätzlich vorgesehenen Transversalstruktur in den Inkrementalteilungs-Abtastfeldern 16a-16f. Diesbezüglich sei noch einmal auf die EP 0735 346 A2 verwiesen.

Um die durch das Referenzimpuls-Abtastfeld 17 tretenden Strahlenbündel in y-Richtung zum zugehörigen Referenzimpuls-Detektorelement 13 abzulenken, ist es möglich, ein geeignetes optisches Ablenkelement in Form eines Keilprismas auf der Seite des Abtastplatte 15 im Bereich des Referenzmarkierungs-Abtastfeldes 17 anzuordnen. Alternativ hierzu könnte auch die Optik 14 einen Teilbereich mit einer entsprechend ablenkenden optischen Wirkung aufweisen.
An dieser Stelle sei jedoch noch einmal darauf hingewiesen, daß es sich bei der Relativanordnung der verschiedenen Detektorelemente 12a-12d, 13 in Bezug auf die Meßrichtung x und deren Anzahl um keine erfindungswesentliche Maßnahme handelt. Es kann in alternativen Ausführungsvarianten demzufolge auch eine andere Abtastanordnung vorgesehen werden, beispielsweise eine übliche Vierfeld-Abtastung mit parallel zur Meßrichtung x angeordneten Detektorelementen etc..

Auf eine Darstellung einer Auswerteeinheit, die die von der Positionsmeßeinrichtung gelieferten Inkremental- und Referenzimpulssignale zur Positionsbestimmung weiterverarbeitet, wurde in den Darstellungen der Figuren 1a-1d verzichtet. Es kann sich hierbei etwa um eine bekannte numerische Werkzeugmaschinensteuerung handeln.

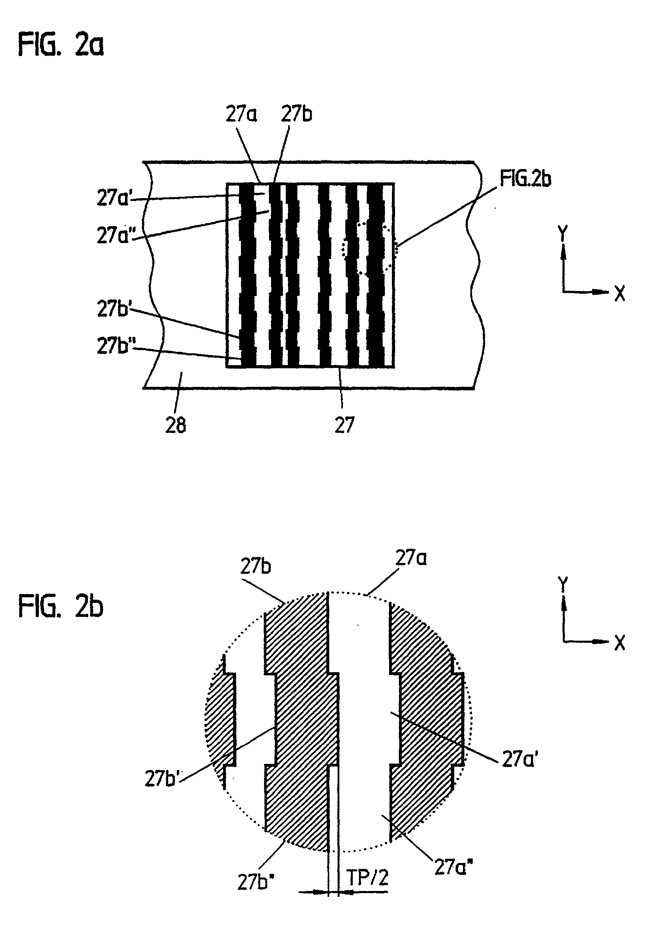

Eine Draufsicht auf ein zweites Ausführungsbeispiel eines erfindungsgemäß ausgestalteten Referenzmarkierungs-Abtastfeldes 27 ist in Figur 2a dargestellt, die einen Ausschnitt aus der Abtastplatte der Abtasteinheit zeigt. Der in Figur 2a markierte Teilbereich des Referenzmarkierungs-Abtastfeldes 27 ist in Figur 2b vergrößert dargestellt. Diese Ausführungsvariante eines Referenzmarkierungs-Abtastfeldes 27 kann selbstverständlich ebenfalls in Verbindung mit einer Abtastgeometrie entsprechend dem vorangegangenen Beispiel eingesetzt werden.
Innerhalb des Referenzmarkierungs-Abtastfeldes 27 ist in dieser Ausführungsform wiederum eine Strukturierung in Meßrichtung x vorgesehen, die aus einer Abfolge von transparenten und opaken Bereichen 27a, 27b besteht, die sich in y-Richtung erstrecken. Die Abfolge der transparenten und opaken Bereiche 27a, 27b bzw. die Anordnung von deren Schwerpunkten in Meßrichtung x ist wiederum in Abhängigkeit der Abfolge der durchlässigen und undurchlässigen Bereiche der abzutastenden - nicht gezeigten - Referenzmarkierung auf dem Maßstab gewählt.
Desweiteren ist im dargestellten Ausführungsbeipiel des Referenzmarkierungs-Abtastfeldes 27 eine periodische Strukturierung desselben senkrecht bzw. transversal zur Meßrichtung x vorgesehen, d.h. in y-Richtung. Hierzu sind die länglichen, transparenten bzw. opaken Bereiche 27a, 27b in Teilbereiche 27a', 27a", 27b', 27b" unterteilt. Die benachbarten bzw. aneinandergrenzenden Teilbereiche 27a', 27a" bzw. 27b', 27b" sind innerhalb jedes transparenten bzw. opaken Bereiches 27a, 27b dabei um eine halbe Teilungsperiode TP/2 der abgetasteten Inkrementalteilung zueinander versetzt angeordnet. Bezüglich dieses Versatzes der Teilbereiche 27a', 27a", 27b', 27b" in x-Richtung sei insbesondere auf die vergrößerte Teilansicht der Figur 2b hingewiesen. Pro transparentem bzw. opakem Bereich 27a, 27b sind im dargestellten Ausführungsbeispiel der Figur 2a insgesamt 10 zueinander versetzte Teilbereiche 27a', 27a'', 27b', 27b" vorgesehen. Bei der möglichen Abtastung einer Teilungsperiode TP von 40µm ist eine Breite des Abtastfeldes 27 in y-Richtung von 4mm vorgesehen.

Eine derartige zusätzliche Strukturierung des Referenzmarkierungs-Abtastfeldes 27 hat nunmehr ebenfalls zur Folge, daß eine optische Filterwirkung bei der Abtastung der Referenzmarkierung auf dem Maßstab dergestalt resultiert, daß der periodische Anteil der Inkrementalsignale am Referenzimpulssignal benachbart zur Referenzposition eliminiert bzw. zumindest der entsprechende Grundwellenanteil der Inkrementalsignale gefiltert wird. So ergeben sich bei der Abtastung der Inkrementalteilung aus den verschiedenen, zueinander versetzten durchlässigen Teilbereichen 27a', 27a" Teilsignale mit einer gegenphasigen Signalmodulation. Der gesamte periodische Anteil der Inkrementalsignale mittelt sich dadurch weg, d.h. es verbleibt lediglich ein Signalanteil mit konstanter Signalamplitude, welcher über das dem Referenzmarkierungs-Abtastfeld 27 zugeordnete Detektorelement benachbart zur Referenzposition "0" erfasst wird. Gegenüber diesem Signalanteil weist das Referenzimpulssignal an der Referenzposition eine für die Detektion hinreichende Modulation bzw. Signalintensität auf, so daß eine sichere Detektion dieses Signales gewährleistet ist.

Bereits an dieser Stelle sei darauf hingewiesen, daß es sich auch beim beschriebenen Beispiel der Figuren 2a und 2b lediglich um eine weitere mögliche Variante zur erfindungsmäßen Ausgestaltung des Referenzimpuls-Abtastfeldes handelt. Wie nachfolgend noch veranschaulicht wird, existieren selbstverständlich noch andere Möglichkeiten der Strukturierung des Referenzmarkierungs-Abtastfeldes, um eine derartige optische Filterwirkung bei der Abtastung der in die Inkrementalteilung integrierten Referenzmarkierung zu erreichen und den unerwünschten periodischen Inkrementalsignalanteil bzw. zumindest dessen Grundwelle am Referenzimpulssignal zu eliminieren.

Die in Figur 2a und 2b vorgeschlagene Filterung durch die geeignete Ausgestaltung bzw. Strukturierung des Referenzmarkierungs-Abtastfeldes bewirkt eine im Vergleich zur ersten Ausführungsform der Figuren 1a-1d nochmals verbesserte Filterwirkung. So liegt zwischen dem abgetasteten Maßstab und der Abtasteinheit aufgrund von Beugungseffekten in der Regel eine Intensitätsverteilung vor, die eine Filterung lediglich aufgrund der geeigneten Breiten der durchlässigen Bereiche des Referenzmarkierungs-Abtastfeldes erschwert. Zudem verändert sich bei einem eventuellen Verkippen des Maßstabes um die y-Achse die zur Verfügung stehende Öffnungen der durchlässigen Bereiche des Referenzmarkierungs-Abtastfeldes, so daß auch in diesem Fall keine optimale Filterwirkung resultiert. Demgegenüber bietet die in Figur 2a und 2b vorgeschlagene Ausführungsform des Referenzmarkierungs-Abtastfeldes 27 bereits eine verbesserte Filterwirkung.

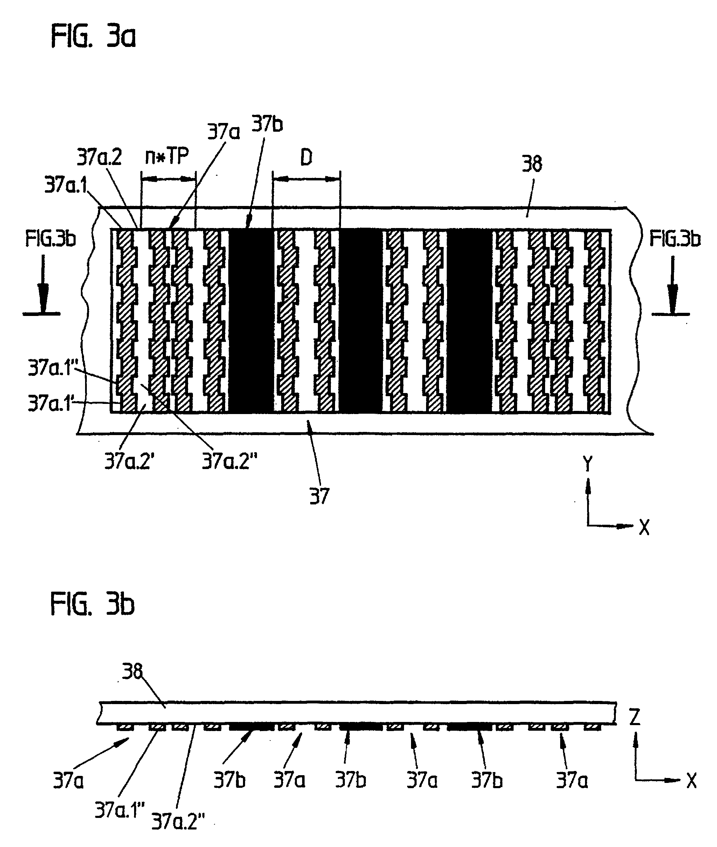

Eine weitere, vorteilhafte Ausgestaltung des Referenzmarkierungs-Abtastfeldes auf Grundlage der erfindungsgemäßen Überlegungen sei am folgenden, dritten Ausführungsbeispiel anhand der Figuren 3a und 3b erläutert. Während die bisherigen Varianten bezüglich der Ausgestaltung des Referenzmarkierungs-Abtastfeldes allesamt auf Filterwirkungen basierten, die durch Amplitudengitter bzw. entsprechende Blendenstrukturen mit durchlässigen und undurchlässigen Bereichen verursacht wurden, kann gemäß dem nachfolgenden Ausführungsbeispiel auch eine Filterwirkung über geeignet ausgebildete Phasenstrukturen in den durchlässigen Bereichen des Referenzmarkierungs-Abtastfeldes erzielt werden.

Figur 3a zeigt hierbei die Draufsicht auf ein Ausführungsbeispiel eines entsprechend ausgebildeten Referenzmarkierungs-Abtastfeldes 37. In Figur 3b ist ein Querschnitt desselben durch die Figur 3a eingezeichnete Linie dargestellt.
Das Referenzmarkierungs-Abtastfeld 37 weist in Meßrichtung x benachbart angeordnete durchlässige Bereiche 37a und undurchlässige Bereiche 37b auf. Innnerhalb der durchlässigen Bereiche 37a ist numehr zur Filterung des periodischen Inkrementalsignalanteiles am Referenzimpulssignal eine bestimmte Phasenstrukturierung vorgesehen. Diese besteht aus in Meßrichtung x abwechselnd aufeinanderfolgend angeordneten Bereichen 37a.1, 37a.2 mit unterschiedlichen Brechungsindizes für die durchtretenden Strahlenbündel, was in den Figuren 3a und 3b durch die schraffierten und nichtschraffierten Bereiche 37a.1, 37a.2 angedeutet werden soll. Innerhalb dieser Bereiche 37a.1, 37a.2 ist eine weitere Strukturierung in y-Richtung dergestalt vorgesehen, daß jeweils in y-Richtung aneinandergrenzende Teilbereiche 37a.1', 37a.1'', 37a.2', 37a.2" um eine halbe Teilungsperiode TP der abgetasteten Inkrementalteilung gegeneinander versetzt angeordnet sind.
Die durchlässigen Bereiche 37a des Referenzmarkierungs-Abtastfeldes sind demzufolge als diffraktive optische Elemente ausgebildet, die zum einen eine fokussierende optische Wirkung für die durchtretenden Strahlenbündel besitzen. Hierbei ergibt sich aufgrund der gewählten Ausbildung der diffraktiven optischen Elemente eine linienförmige Fokussierung der von der Lichtquelle kommenden Strahlenbündel in die Ebene der Teilungsspur auf dem Maßstab, wobei die resultierenden Brennlinien in y-Richtung ausgerichtet sind, also in Längsrichtung der reflektierenden und nicht-reflektierenden Bereiche der Teilungsstrukturen auf dem Maßstab.
Zum anderen resultiert aufgrund des gewählten gegenseitigen Versatzes der Teilbereiche 37a.1', 37a.1'', 37a.2', 37a.2" jeweils ein Versatz der zugehörigen Brennlinien um eine halbe Teilungsperiode und somit die gewünschte optische Filterwirkung für den Inkrementalsignalanteil am Referenzimpulssignal. Die Signalanteile aus in y-Richtung benachbarten Teilbereichen 37a.1', 37a.1'', 37a.2', 37a.2" sind gegenphasig moduliert und löschen sich im Mittel aus.

Im Fall der letztgenannten Maßnahmen, d.h. der Anordnung geeignet ausgebildeter diffraktiver optischer Elemente mit fokussierender Wirkung in den durchlässigen Bereichen 37a des Referenzmarkierungs-Abtastfeldes 37 gemäß Figur 3a und 3b, kann die jeweilige Breite D dieser Bereiche 37a in Meßrichtung x vorzugsweise größer gewählt werden. Beispielsweise können die Breiten D der durchlässigen Bereiche 37a eines derart ausgebildeten Referenzmarkierungs-Abtastfeldes 37 aufgrund der fokussierenden Wirkung der diffraktiven optischen Elemente in der Größenordnung von zwei oder mehr Teilungsperioden der abgetasteten Inkrementalteilung ausgebildet werden. Auf diese Art und Weise kann detektorseitig zum einen eine höhere Signalintensität erreicht werden. Zum anderen ergibt sich bei einer derartigen Ausgestaltung ein vorteilhafter weiterer Effekt bei der Detektion des Referenzimpulssignales. So wird bei einer geringfügigen Verkippung des Maßstabes senkrecht zur Meßrichtung, d.h. um die y-Richtung, beim zweiten Durchtreten der Strahlenbündel durch das Referenzimpuls-Abtastfeld lediglich ein relativ kleiner Teil des Strahlquerschnittes abgeblockt. Es ergibt sich auch bei einer derartigen Verkippung noch eine hinreichende Signalintensität auf der Detektorseite. Insgesamt resultiert somit eine Unempfindlichkeit des Gesamtsystems gegenüber möglichen Verkippungen von Maßstab und Abtasteinheit aus einer idealen Relativposition.

Der Abstand der Schwerpunkte derjenigen Bereiche mit den gleichen Brechungsindizes ist desweiteren vorzugsweise so zu wählen, daß dafür n∗TP gilt, wobei n eine ganze Zahl darstellt. Desweiteren ist die Breite D der durchlässigen Bereiche 37a in x-Richtung derart zu dimensionieren, daß unter Berücksichtigung des Abbildungsfaktors der fokussierenden optischen Elemente die durchlässigen Bereiche 37a eine Breite D aufweisen, die der Teilungsperiode TP der Inkrementalteilung entspricht.

Als geeignete diffraktive Elemente in den durchlässigen Teilbereichen 37a können z.B. diffraktive Zylinderzonenplatten mit einer binären Struktur oder aber Fresnelzylinderlinsen mit einer geblazten Struktur eingesetzt werden. Daneben eignen sich auch phasenangepaßte Fresnel-Zylinderlinsenelemente in vorteilhafter Weise. Desweiteren können selbstverständlich in die durchlässigen Teilbereiche des Abtastfeldes auch optische Elemente in Form von refraktiven Zylinderlinsen eingesetzt werden.
Sowohl die erwähnten Varianten von fokussierenden optischen Elementen als auch weitere Alternativen mit den angegebenen optischen Eigenschaften können in die erfindungsgemäße Abtasteinheit bzw. in das Referenzmarkierungs-Abtastfeld integriert werden.

Unter der fokussierenden Eigenschaft derartiger Elemente ist dabei im Sinne der vorliegenden Erfindung nicht nur eine exakte Fokussierung eines kollimierten Lichtbündels zu verstehen, wie dies im gezeigten Ausführungsbeispiel der Fall ist. Vielmehr kann auch lediglich eine zumindest teilfokussierende Wirkung dieser Elemente je nach Abtastanordnung vorgesehen werden. Beispielsweise kann eine teilfokussierende Wirkung im Fall einer Beleuchtung ohne Kollimatoroptik bzw. im Fall einer teilkollimierten Beleuchtung ausreichend sein.

Neben den bislang anhand der beiden Ausführungsbeispiele diskutierten Filterungsansätzen mit Hilfe von Amplituden- oder Phasenstrukturen im Referenzmarkierungs-Abtastfeld können selbstverständlich auch Filterungsvarianten eingesetzt werden, die diese beiden Prinzipien kombinieren. Beispielsweise lassen sich etwa im Ausführungsbeispiel der Figuren 2a und 2b die durchlässigen Bereiche 27a des Referenzmarkierungs-Abtastfeldes 27 mit einer Substrukturierung gemäß dem Ausführungsbeispiel der Figuren 3a und 3b versehen. Es ergibt sich somit eine kombinierte Filterwirkung auf Grundlage von filternden Amplituden- und Phasenstrukturen.

In den Figuren 4 und 5 sind weitere Varianten hinsichtlich der möglichen Ausgestaltung der Filterstruktur der Referenzmarkierungs-Abtastfelder gezeigt. Während dabei wiederum Amplitudenstrukturen innerhalb des Referenzmarkierungs-Abtastfeldes zur Filterung eingesetzt werden, können selbstverständlich auch derartige Amplitudenstrukturen im Referenzmarkierungs-Abtastfeld mit geeigneten Phasenstrukturen zur Erzielung der gewünschten Filterwirkung kombiniert werden.

Gemäß Figur 4 ist demzufolge auch eine schräge Anordnung der durchlässigen und undurchlässigen Bereiche 47a, 47b innerhalb des Referenzmarkierungs-Abtastfeldes 47 auf der Abtastplatte 48 als Filterstruktur möglich. Die verschiedenen Bereiche 47a, 47b sind dabei unter einem Winkel α bezüglich der Maßstab-Inkrementalteilung innerhalb des Referenzmarkierungs-Abtastfeldes 47 angeordnet. Hierbei ist der Winkel α dergestalt zu wählen, daß sich Anfang und Ende der Bereiche 47a, 47b über die Länge l_{y} um eine Teilungsperiode der abgetasteten Teilungsperiode TP in ihrer x-Koordinate unterscheiden. Das heißt, die Bereiche 47a, 47b erstrecken sich in x-Richtung aufgrund ihrer Neigung gegenüber der Inkrementalteilung jeweils über eine Teilungsperiode der abgetasteten Inkrementalteilung.

Gemäß dem Ausführungsbeispiel der Figur 5 ist eine V-förmige Anordnung der durchlässigen und undurchlässigen Bereiche 57a, 58b innerhalb des Referenzmarkierungs-Abtastfeldes 57 auf der Abtastplatte 58 als Filterstruktur ebenfalls möglich, um die Eliminierung des periodischen Signalanteiles am Referenzimpulssignal zu bewirken. Die Anordnung der beiden V-Schenkel erfolgt dabei unter den Winkeln β relativ zur Maßstab-Inkrementalteilung. Hinsichtlich der geeigneten Wahl dieses Winkels gilt für die beiden V-Schenkel, daß sich diese aufgrund ihrer Neigung gegenüber der Inkrementalteilung in x-Richtung jeweils über eine Teilungsperiode der abgetasteten Inkrementalteilung erstrecken.

Weitere Filtermöglichkeiten auf Seiten des Referenzmarkierungs-Abtastfeldes sehen vor, zu diesem Zweck sogenannte Vernier-Filter einzusetzen, bei denen die durchlässigen Bereiche aus dem Beispiel des Referenzmarkierungs-Abtastfeldes aus Figur 1c gegenüber den entsprechenden Positionen der ausgelassenen Striche der Referenzmarkierung des Maßstabes definiert verschoben werden. Ferner können auch kosinusförmige Schlitzöffnungen mit einer Breite von zwei Teilungsperioden auf der Abtastplatte zur Filterung eingesetzt werden. Ebenso können die Schlitzöffnungen und/oder die Phasensturkturen einen gebogenen Verlauf aufweisen etc..

Alle diese Varianten bewirken jeweils eine Eliminierung des periodischen Signalanteiles am Referenzimpulssignal. Selbstverständlich können sowohl bei diesen als auch bei weiteren möglichen Filterungsvarianten in den durchlässigen Bereichen des Referenzimpuls-Abtastfeldes eine Phasenstrukturierung mit fokussierenden optischen Elementen angeordnet werden usw..

Während bislang lediglich eine erfindungsgemäße Filterung des unerwünschten Inkrementalsignalanteiles am Referenzimpulssignal über eine geeignete Ausgestaltung des Referenzmarkierungs-Abtastfeldes beschrieben wurde, ist es im Rahmen der vorliegenden Erfindung desweiteren möglich, diesen Signalanteil durch eine geeignete Ausgestaltung der Detektorelemente zu beseitigen oder zumindest zu minimieren. Hinsichtlich einer möglichen Ausgestaltung der dazu vorgesehenen Detektorelemente sei auf das in Figur 6 gezeigte Ausführungsbeispiel einer Detektoranordnung verwiesen. Im Fall einer derartigen Filterungsvariante entfällt selbstverständlich die ansonsten erforderliche separate Abtastplatte.
Hierbei ist in Fig. 6 eine benachbarte Anordnung der verschiedenen optoelektronischen Detektorelemente 62a-62d, 63, 63', 63" in Meßrichtung gezeigt, die ebenfalls zur Abtastung einer in die Inkrementalteilung integrierten Referenzmarkierung geeignet ist. So sind hierzu auf einer entsprechenden Trägerplatine Detektorelemente 62a-62d für die Inkrementalsignale vorgesehen, die gruppenweise angeordnet und verschaltet werden. Zwischen den Gruppen dieser Detektorelemente wiederum sind die Referenzimpuls-Detektorelemente 63, 63', 63" angeordnet. Hierbei ist benachbart zu einer ersten Vierergruppe von Detektorelementen 62a-62d ein erstes Referenzimpuls-Detektorelement 63 vorgesehen; anschließend folgen zwei Vierergruppen von Detektorelementen für die Inkrementalsignale, denen ein zweites Referenzimpuls-Detektorelement 63', eine weitere Vierergruppe von Detektorelementen für die Inkrementalsignale und schließlich ein drittes Referenzimpuls-Detektorelement 63" nachgeordnet ist.

Über eine Verschaltung der von links aus jeweils ersten Detektorelemente in den Vierergruppen resultiert ein 0°-Abtastsignal, aus der Verschaltung der jeweils zweiten Detektorelemente ein 90°-Abtastsignal usw.. Das am Signalabgriff RI anliegende Referenzimpulssignal wiederum ergibt sich aus der angedeuteten parallelen Verschaltung der drei Referenzimpuls-Detektorelemente 63, 63'63''.
Die gezeigte Anordnungsvariante der verschiedenen Detektorelemente ergibt sich dabei in Abhängigkeit der Struktur des zu erfassenden Referenzmarkierung und wird auf dieselbe entsprechend abgestimmt. Im Zusammenhang mit den Abständen benachbarter Referenzimpuls-Detektorelemente 63, 63', 63" ist bei der beschriebenen Verschaltungsvariante der Detektorelemente zu beachten, daß dieser ein ganzzahliges Vielfaches M der Teilungsperiode TP der abgetasteten Inkrementalteilung beträgt. Die Breite jedes Referenzimpuls-Detektorelementes 63, 63', 63" entspricht im gezeigten Ausführungsbeispiel einer Teilungsperiode TP.
Um den gewünschten Filterungseffekt bezüglich des Inkrementalsignalanteiles am Referenzimpulssignal zu erzielen, weisen die Referenzimpuls-Detektorelemente 63, 63', 63'' jeweils eine bestimmte filternde Strukturierung senkrecht zur Meßrichtung x auf. So sind jeweils einzelne Teilbereiche eines einzelnen Referenzimpuls-Detektorelementes 63, 63', 63" um eine halbe Teilungsperiode in Meßrichtung x versetzt gegeneinander angeordnet. Auf diese Art und Weise ergibt sich im Mittel ebenfalls eine Auslöschung der gegenphasig modulierten Inkrementalsignalanteile am Referenzimpulssignal, die auf die verschiedenen Teilbereiche auftreffen.
Auch über eine derartige detektorseitige Filterung läßt sich damit der unerwünschte periodische Anteil der Inkrementalsignale benachbart zur Referenzposition erfindungsgemäß eliminieren.

## Patentansprüche

1. Abtasteinheit für eine Positionsmeßeinrichtung, die neben periodischen Inkrementalsignalen auch mindestens ein Referenzimpulssignal bei einer definierten Referenzposition eines Maßstabes und einer relativ dazu beweglichen Abtasteinheit liefert, wobei die Abtasteinheit zur Abtastung einer Referenzmarkierung auf dem Maßstab eine Abtastplatte mit mindestens einem Referenzmarkierungs-Abtastfeld und/oder mindestens ein Referenzimpuls-Detektorelement umfaßt,
**dadurch gekennzeichnet, daß**
entweder durch die Ausgestaltung des Referenzmarkierungs-Abtastfeldes (17; 27; 37; 47; 57) oder durch die Ausgestaltung von ein oder mehreren Referenzmarkierungs-Detektorelementen (63, 63', 63'') eine Filterwirkung dergestalt resultiert, daß der periodische Inkrementalsignalanteil am Referenzimpulssignal benachbart zur Referenzposition (0) weitgehend eliminierbar ist.

2. Abtasteinheit nach Anspruch 1, **dadurch gekennzeichnet, daß** das Referenzmarkierungs-Abtastfeld (17) in Meßrichtung (x) benachbarte durchlässige und undurchlässige Bereiche (17a, 17b) aufweist, wobei zur Erzielung der Filterwirkung die durchlässigen Bereiche (17a) in Meßrichtung (x) eine Breite aufweisen, die einer Teilungsperiode (TP) oder einem ganzzahligen Vielfachen der Teilungsperiode (TP) der maßstabseitig abgetasteten Inkrementalteilung (7) entspricht.

3. Abtasteinheit nach Anspruch 1, **dadurch gekennzeichnet, daß** das Referenzmarkierungs-Abtastfeld (27) in Meßrichtung (x) benachbarte durchlässige und undurchlässige Bereiche (27a, 27b) aufweist, die senkrecht zur Meßrichtung (x) jeweils in mehrere Teilbereiche (27a', 27a", 27b', 27b") unterteilt sind und zur Erzielung der Filterwirkung benachbarte Teilbereiche (27a', 27a", 27b', 27b'') derart in Meßrichtung (x) versetzt zueiander angeordnet sind, daß aus benachbarten Teilbereichen (27a', 27a", 27b', 27b'') resultierenden Signalanteile eine gegenphasige Modulation erfahren und sich im Mittel auslöschen.

4. Abtasteinheit nach Anspruch 3, **dadurch gekennzeichnet, daß** die Teilbereiche (27a', 27a", 27b', 27b") gegeneinander jeweils um eine halbe Teilungsperiode (TP) der abgetasteten Inkrementalteilung (7) verschoben sind.

5. Abtasteinheit nach Anspruch 1, **dadurch gekennzeichnet, daß** das Referenzmarkierungs-Abtastfeld (47) in Meßrichtung (x) benachbarte durchlässige und undurchlässige Bereiche (47a, 47b) aufweist, wobei zur Erzielung der Filterwirkung diese Bereiche (47a, 47b) unter einem derartigen Winkel (α) gegenüber der abgetasteten Inkrementalteilung (8) angeordnet sind, daß sich Anfang und Ende der Bereiche (47a, 47b) über die Bereichslänge (l_{y}) um eine Teilungsperiode (TP) der abgetasteten Inkrementalteilung (7) in ihrer Meßrichtungs-Koordinate (x) unterscheiden.

6. Abtasteinheit nach Anspruch 1, **dadurch gekennzeichnet, daß** das Referenzmarkierungs-Abtastfeld (57) in Meßrichtung (x) benachbarte durchlässige und undurchlässige Bereiche (57a, 57b) aufweist, wobei zur Erzielung der Filterwirkung diese Bereiche (57a, 57b) V-förmig zur Meßrichtung (x) angeordnet sind und die beiden V-Schenkel einen Winkel (β) relativ zur Inkrementalteilung einnehmen, welcher derart gewählt ist, daß sich die V-Schenkel in Meßrichtung (x) jeweils über eine Teilungsperiode (TP) der abgetasteten Inkrementalteilung (7) erstrecken.

7. Abtasteinheit nach Anspruch 1, **dadurch gekennzeichnet, daß** das Referenzmarkierungs-Abtastfeld (37) in Meßrichtung (x) benachbarte durchlässige und undurchlässige Bereiche (37a, 37b) aufweist, wobei zur Erzielung der Filterwirkung die durchlässigen Bereiche (37a) eine Phasenstrukturierung aufweisen.

8. Abtasteinheit nach Anspruch 1, **dadurch gekennzeichnet, daß** das Referenzmarkierungs-Abtastfeld (37) in Meßrichtung (x) benachbarte durchlässige und undurchlässige Bereiche (37a, 37b) aufweist und in den durchlässigen Bereichen (37a) fokussierende optische Elemente angeordnet sind, deren linienförmige Foki in der Ebene der am Maßstab abgetasteten Referenzmarkierung liegen, wobei zur Erzielung der Filterwirkung die durch verschiedene Teilbereiche (37a.1', 37a.1", 37a.2', 37a.2'') fokussierten Strahlenbündel detektorseitig gegenphasig modulierte Signale liefern, die sich im Mittel auslöschen.

9. Abtasteinheit nach Anspruch 8, **dadurch gekennzeichnet, daß** in den durchlässigen Bereichen (37a) in Meßrichtung (x) benachbarte Bereiche (37a.1, 37a.2) mit unterschiedlichen Brechungsindizes angeordnet sind, die senkrecht zur Meßrichtung (x) jeweils in Teilbereiche (37a.1', 37a.1", 37a.2', 37a.2'') unterteilt sind, die gegeneinander in Meßrichtung (x) um eine halbe Teilungsperiode (TP) der abgetasteten Inkrementalteilung versetzt angeordnet sind.

10. Abtasteinheit nach Anspruch 8, **dadurch gekennzeichnet, daß** die fokussierenden optischen Elemente als diffraktive optische Elemente ausgebildet sind.

11. Optische Positionsmeßeinrichtung, die neben Inkrementalsignalen auch mindestens ein Referenzimpulssignal bei einer definierten Relativposition eines Maßstabes (2) und einer relativ dazu beweglichen Abtasteinheit (1) liefert, wobei in mindestens einer Inkrementalteilung (7) des Maßstabes (2) eine Referenzmarkierung (8) angeordnet ist, **gekennzeichnet durch** eine Abtasteinheit (1) nach mindestens einem der vorangehenden Ansprüche.

12. Optische Positionsmeßeinrichtung nach Anspruch 11, **dadurch gekennzeichnet, daß** die in die Inkrementalteilung (7) integrierte Referenzmarkierung (8) eine aperiodische Abfolge von reflektierenden/transmittierenden und nicht-reflektierenden/opaken Bereichen (6a, 6b) umfaßt, wobei die Breiten der reflektierenden/transmittierenden Bereiche (6a) jeweils untereinander wie auch mit den reflektierenden/transmittierenden Bereichen der Inkrementalteilung (7) identisch sind und einen Abstand zum jeweils nächsten reflektierenden/transmittierenden Bereich besitzen, der gleich einer Teilungsperiode (TP) oder einem ganzzahligen Vielfachen der Teilungsperiode der Inkrementalteilung (7) ist.

13. Optische Positionsmeßeinrichtung nach Anspruch 12, **dadurch gekennzeichnet, daß** der Maßstab (2) zur Auflicht-Abtastung ausgebildet ist und die Teilungsstruktur des Maßstabes benachbart angeordnete reflektierende und nicht-reflektierende Bereiche (6a, 6b) aufweist.

## Claims

1. Read-out unit for a position measuring device which, in addition to periodic incremental signals, delivers also at least one reference impulse signal in the case of a defined reference position of a scale and of a read-out unit which is movable relative thereto, the read-out unit for scanning a reference marking on the scale comprising a scanning plate with at least one reference marking scanning field, and/or at least one reference impulse detector element,
**characterised in that**,
either by means of the configuration of the reference marking scanning field (17; 27; 37; 47; 57) or by means of the configuration of one or more reference marking detector elements (63, 63', 63"), a filter effect results in such a way that the periodic incremental signal portion at the reference impulse signal adjacent to the reference position (0) can be extensively eliminated.

2. Read-out unit according to claim 1, **characterised in that** the reference marking scanning field (17) has adjacent permeable and impermeable regions (17a, 17b) in the measuring direction (x), in order to achieve the filter effect, the permeable regions (17a) having a width in the measuring direction (x) which corresponds to one division period (TP) or to a whole number multiple of the division period (TP) of the incremental division (7) which is scanned on the scale side.

3. Read-out unit according to claim 1, **characterised in that** the reference marking scanning field (27) has adjacent permeable and impermeable regions (27a, 27b) in the measuring direction (x), which regions are sub-divided perpendicularly to the measuring direction (x) respectively into a plurality of partial regions (27a', 27a", 27b' , 27b") and, in order to achieve the filter effect, adjacent partial regions (27a', 27a", 27b', 27b") are disposed offset relative to each other in the measuring direction (x) in such a manner that signal portions which result from adjacent partial regions (27a', 27a'', 27b', 27b") experience an anti-phase modulation and are eliminated on average.

4. Read-out unit according to claim 3, **characterised in that** the partial regions (27a', 27a", 27b', 27b") are mutually displaced respectively by half a division period (TP) of the scanned incremental division (7).

5. Read-out unit according to claim 1, **characterised in that** the reference marking scanning field (47) has adjacent permeable and impermeable regions (47a, 47b) in the measuring direction (x), in order to achieve the filter effect, these regions (47a, 47b) being disposed at such an angle (a) relative to the scanned incremental division (8) that the beginning and end of the regions (47a, 47b) differ over the length of the region (l_{y}) by one division period (TP) of the scanned incremental division (7) in their measuring direction coordinate (x).

6. Read-out unit according to claim 1, **characterised in that** the reference marking scanning field (57) has adjacent permeable and impermeable regions (57a, 57b) in the measuring direction (x), in order to achieve the filter effect, these regions (57a, 57b) being disposed in a V-shape to the measuring direction (x) and both V-legs adopting an angle (b) relative to the incremental division, which angle is chosen such that the V-legs extend respectively over one division period (TP) of the scanned incremental division (7) in the measuring direction (x).

7. Read-out unit according to claim 1, **characterised in that** the reference marking scanning field (37) has adjacent permeable and impermeable regions (37a, 37b) in the measuring direction (x), the permeable regions (37a) having a phase structuring in order to achieve the filter effect.

8. Read-out unit according to claim 1, **characterised in that** the reference marking scanning field (37) has adjacent permeable and impermeable regions (37a, 37b) in the measuring direction (x) and focusing optical elements are disposed in the permeable regions (37a), the lineal foci of said elements lying in the plane of the reference marking scanned on the scale, in order to achieve the filter effect, the ray bundles which are focused by means of different partial regions (37a.1', 37a.1", 37a.2', 37a.2") delivering anti-phase modulated signals at the detector side, said signals being eliminated on average.

9. Read-out unit according to claim 8, **characterised in that**, in the permeable regions (37a) in the measuring direction (x), adjacent regions (37a.1, 37a.2) with different refractive indices are disposed which are sub-divided perpendicularly to the measuring direction (x) respectively into partial regions (37a.1', 37a.1", 37a.2', 37a.2") which are disposed mutually offset in the measuring direction (x) by half a division period (TP) of the scanned incremental division.

10. Read-out unit according to claim 8, **characterised in that** the focusing optical elements are configured as diffractive, optical elements.

11. Optical position measuring device which, in addition to incremental signals, also delivers at least one reference impulse signal in the case of a defined relative position of a scale (2) and of a read-out unit (1) which is movable relative thereto, a reference marking (8) being disposed in at least one incremental division (7) of the scale (2), **characterised by** a read-out unit (1) according to at least one of the preceding claims.

12. Optical position measuring device according to claim 11, **characterised in that** the reference marking (8) which is integrated into the incremental division (7) comprises an aperiodic sequence of reflecting/transmitting and non-reflecting/opaque regions (6a, 6b), the widths of the reflecting/transmitting regions (6a) being identical respectively to each other as also to the reflecting/transmitting regions of the incremental division (7), and having a spacing to the respectively next reflecting/transmitting region which equals one division period (TP) or a whole number multiple of the division period of the incremental division (7).

13. Optical position measuring device according to claim 12, **characterised in that** the scale (2) is configured for scanning incident light and the division structure of the scale has adjacently disposed reflecting and non-reflecting regions (6a, 6b).

## Revendications

1. Unité de palpage pour un dispositif de mesure de position qui, en plus de signaux incrémentaux périodiques, délivre au moins un signal impulsionnel de référence pour une position de référence définie d'une règle graduée et d'une unité de palpage mobile par rapport à celle-ci, l'unité de palpage comportant, pour le palpage d'une marque de référence sur la règle, une plaque de palpage avec au moins un champ de palpage de marque de référence et/ou au moins un élément détecteur d'impulsion de référence, **caractérisée en ce que**, soit par l'agencement du champ de palpage de marque de référence (17; 27; 37 ; 47 ; 57), soit par l'agencement d'un ou de plusieurs éléments détecteurs d'impulsion de référence (63 ; 63'; 63"), on obtient un effet de filtre tel, que la fraction de signal incrémental périodique du signal impulsionnel de référence dans le voisinage de la position de référence (0) est éliminée dans une large mesure.

2. Unité de palpage selon la revendication 1, **caractérisée en ce que** le champ de palpage de marque de référence (17) présente des parties transparentes et des parties non transparentes (17a, 17b) contiguës dans la direction mesure (x), les parties transparentes (17a), pour obtenir l'effet de filtre, présentant dans la direction de mesure (x) une largeur qui correspond à une période de graduation (TP) ou à un multiple entier de la période de graduation (TP) de la graduation incrémentale (7) palpée côté règle graduée.

3. Unité de palpage selon la revendication 1, **caractérisée en ce que** le champ de palpage de marque de référence (27) présente des parties transparentes et des parties non transparentes (27a, 27b) contiguës dans la direction mesure (x), qui sont subdivisées perpendiculairement à la direction mesure (x) chacune en plusieurs zones partielles (27a', 27a", 27b', 27b") et qui, pour obtenir l'effet de filtre sont mutuellement décalées dans la direction de mesure (x), de telle sorte que des fractions de signal provenant de zones partielles (27a', 27a", 27b', 27b") contiguës subissent une modulation en opposition de phase et s'annulent en valeur moyenne.

4. Unité de palpage selon la revendication 3, **caractérisée en ce que** les zones partielles (27a', 27a", 27b', 27b") sont mutuellement décalées chaque fois d'une demie période de graduation (TP) de la graduation incrémentale (7) palpée.

5. Unité de palpage selon la revendication 1, **caractérisée en ce que** le champ de palpage de marque de référence (47) présente des parties transparentes et des parties non transparentes (47a, 47b) contiguës dans la direction mesure (x), lesdites zones (47a, 47b), pour obtenir l'effet de filtre, étant disposées sous un angle (α) par rapport à la graduation incrémentale (8) palpée, tel que le début et la fin des zones (47a, 47b), sur la longueur (l_{y}) de la zone, pour la coordonnée correspondant à la direction de mesure (x), soient différenciées d'une période de graduation (TP) de la graduation incrémentale (7) palpée.

6. Unité de palpage selon la revendication 1, **caractérisée en ce que** le champ de palpage de marque de référence (57) présente des parties transparentes et des parties non transparentes (57a, 57b) contiguës dans la direction mesure (x), lesdites zones (57a, 57b), pour obtenir l'effet de filtre, étant disposées en V et les deux branches du V étant disposés sous un angle (β) par rapport à la graduation incrémentale, tel que les branches du V, dans la direction de mesure (x), s'étendent chacune sur une période de graduation (TP) de la graduation incrémentale (7) palpée.

7. Unité de palpage selon la revendication 1, **caractérisée en ce que** le champ de palpage de marque de référence (37) présente des parties transparentes et des parties non transparentes (37a, 37b) contiguës dans la direction mesure (x), les zones (37a) transparentes, pour obtenir l'effet de filtre, présentant une structure de phase.

8. Unité de palpage selon la revendication 1, **caractérisée en ce que** le champ de palpage de marque de référence (37) présente des parties transparentes et des parties non transparentes (37a, 37b) contiguës dans la direction mesure (x) et **en ce que**, dans les zones (37a) transparentes sont disposés des éléments optiques de focalisation, dont les foyers linéaires sont situés dans le plan de la marque de référence palpée sur la règle graduée, les faisceaux de rayons focalisés par différentes zones partielles (37a.1', 37a.1", 37a.2', 37a.2"), pour obtenir l'effet de filtre, délivrant côté détecteur des signaux modulés en opposition de phase qui s'annulent en valeur moyenne.

9. Unité de palpage selon la revendication 8, **caractérisée en ce que** dans les zones (37a) transparentes, sont disposées des zones (37a, 37b) contiguës dans la direction mesure (x) avec des indices de réfraction différents, qui sont subdivisées perpendiculairement à la direction de mesure (x) en des zones partielles (37a.1', 37a.1", 37a.2', 37a.2") mutuellement décalées dans la direction de mesure (x) d'une demi-période de graduation (TP) de la graduation incrémentale palpée.

10. Unité de palpage selon la revendication 8, **caractérisée en ce que** les éléments optiques de focalisation sont conformés en éléments optiques diffractants.

11. Dispositif optique de mesure de position qui, en plus de signaux incrémentaux périodiques, délivre au moins un signal impulsionnel de référence pour une position relative définie d'une règle graduée (2) et d'une unité de palpage (1) mobile par rapport à celle-ci, une marque de référence (8) étant disposée dans au moins une graduation incrémentale (7) de la règle graduée (2), **caractérisé par** une unité de palpage (1) selon au moins une des revendications précédentes.

12. Dispositif optique de mesure de position selon la revendication 11, **caractérisé en ce que** la marque de référence (8) intégrée dans la graduation incrémentale (7) comprend une suite apériodique de zones réfléchissantes/transparentes et des zones non réfléchissantes/opaques (6a, 6b) les largeurs des zones réfléchissantes/transparentes (6a) étant identiques entre elles et à celles des zones réfléchissantes/transparentes de la graduation incrémentale (7) et présentant une distance par rapport à la zone réfléchissante/transparente voisine, qui est égale à une période de graduation (TP) ou à un multiple entier de la période de graduation de la graduation incrémentale (7).

13. Dispositif optique de mesure de position selon la revendication 12, **caractérisé en ce que** la règle graduée (2) est agencée pour une lecture en mode à lumière incidente et que la structure de graduation de la règle graduée présente des zones réfléchissantes et des zones non réfléchissantes (6a, 6b) disposées les unes à côté des autres.
